# FASCICULE DE BREVET EUROPEEN

(11) **EP 2 155 512 B1**
(45) Date de publication et mention de la délivrance du brevet: **22.02.2012**
(21) Numéro de dépôt: 08805794.8
(22) Date de dépôt: 16.05.2008
(51) Int. Cl.: B60J 5/10, B60J 10/08

(54) **OUVRANT ARRIERE POUR VEHICULE AUTOMOBILE COMPRENANT UN CORPS CREUX**
HINTERE ÖFFNUNGSPLATTE FÜR EIN MOTORFAHRZEUG MIT EINEM HOHLKÖRPER
REAR OPENING PANEL FOR MOTOR VEHICLE COMPRISING A HOLLOW BODY

(30) Priorité: 16.05.2007 FR 0755106
(43) Date de publication de la demande: 24.02.2010
(73) Titulaire: Compagnie Plastic Omnium, 69007 Lyon (FR)
(72) Inventeur: LETERRIER, Franck, F-69800 Saint Priest (FR)
(74) Mandataire: Potdevin, Emmanuel Eric
(86) Numéro de dépôt international: PCT/FR2008/050847
(87) Numéro de publication internationale: WO 2008/149023

(56) Documents cités:
- EP-A- 1 028 016
- DE-A1- 19 635 873
- US-A1- 2003 110 705

## Description

La présente invention concerne un ouvrant arrière pour véhicule automobile comprenant un corps creux.

Elle s'applique, en particulier mais non exclusivement, à un véhicule automobile du type « Break », « 4X4 », « Pick-up », ou bien encore « Sport Utility Vehicle ».

Il est connu, notamment de EP 1 028 016, un ouvrant arrière pour véhicule automobile monté mobile entre une position fermée dans laquelle il obture au moins partiellement un accès au véhicule, et une position ouverte dans laquelle il libère au moins partiellement l'accès au véhicule. L'ouvrant est monté pivotant sur le véhicule autour d'un axe géométrique transversal situé en partie inférieure de l'ouvrant.

L'ouvrant arrière décrit dans EP 1 028 016 comprend une peau extérieure d'apparence et une garniture intérieure d'habillage. La peau d'apparence est destinée à être vue par un observateur se trouvant à l'extérieur du véhicule, notamment derrière celui-ci lorsque l'ouvrant est dans sa position fermée. La garniture d'habillage est destinée à être vue par un occupant du véhicule lorsque l'ouvrant est dans sa position fermée.

La garniture d'habillage est moulée dans une matière plastique.

Lorsqu'il est dans sa position fermée, l'ouvrant arrière permet notamment d'assurer l'étanchéité de la caisse. A cet effet, lorsque l'ouvrant est dans sa position fermée, une surface d'étanchéité de la garniture d'habillage s'appuie sur la caisse du véhicule.

Toutefois, dans un tel ouvrant, l'étanchéité de la caisse est perfectible.

A cet effet, l'invention a pour objet un ouvrant arrière pour véhicule automobile monté mobile entre une position fermée dans laquelle il obture au moins partiellement un accès au véhicule, et une position ouverte dans laquelle il libère au moins partiellement l'accès au véhicule, l'ouvrant comprenant une peau extérieure d'apparence et une garniture intérieure d'habillage, la garniture d'habillage étant moulée dans une matière plastique, la garniture d'habillage comprenant une surface d'étanchéité destinée à coopérer avec un organe d'étanchéité agencé sur la caisse du véhicule lorsque l'ouvrant est en position fermée, caractérisé en ce que la surface d'étanchéité est portée par un corps creux venu de moulage avec la garniture d'habillage.

Un tel ouvrant permet d'assurer une étanchéité parfaite de la caisse.

En effet, le corps creux constitue une partie rigide portant la surface d'étanchéité. Cette rigidité permet à l'organe d'étanchéité de s'appuyer parfaitement sur la surface d'étanchéité lorsque l'ouvrant est dans sa position fermée.

Le corps creux permet notamment, pour réaliser la garniture d'habillage, d'utiliser une matière plastique qui serait suffisamment rigide pour remplir sa fonction de garniture, mais pas suffisamment rigide pour offrir une surface d'étanchéité à l'organe d'étanchéité. Ainsi, grâce au corps creux, lorsque l'ouvrant est dans sa position fermée, la surface d'étanchéité n'est pas déformée sous l'effet de la pression exercée par l'organe d'étanchéité sur la garniture. Au contraire, la surface d'étanchéité coopère parfaitement avec l'organe d'étanchéité de façon que l'ouvrant assure l'étanchéité de la caisse.

Dans un mode de réalisation particulier de l'invention, l'ouvrant est monté pivotant autour d'un axe géométrique transversal au véhicule, de préférence situé en partie inférieure de l'ouvrant, de sorte que l'ouvrant en position ouverte présente la garniture intérieure d'habillage sur le dessus.

De préférence, la garniture comprend des première et seconde parties reliées l'une à l'autre par une zone de pliage, les première et seconde parties étant mobiles l'une par rapport à l'autre par pliage de la zone de pliage entre :
- une position ouverte dans laquelle la première et la seconde parties ne sont en contact l'une avec l'autre que par l'intermédiaire de la zone de pliage, et
- une position fermée dans laquelle les première et seconde parties se rejoignent en dehors de la zone de pliage et forment le corps creux.

On comprendra par « pliage » le fait que la première et la seconde parties de la garniture forment une arête.

Dans une variante, la zone de pliage est remplacée par une zone de courbure, c'est à dire que la première partie forme un angle avec la seconde partie mais sans former d'arête. Cette variante est industriellement moins avantageuse car la reproductibilité de la courbure, donc la forme du creux, est plus difficile à assurer.

Les zones de pliage ou de courbure permettent de mouler les première et seconde parties de la garniture sans mouler de corps creux. En effet, le moulage d'un corps creux nécessite généralement un moule et un procédé de fabrication complexes contrairement au moulage d'une pièce ne présentant pas de corps creux.

A la sortie du moule, les première et seconde parties sont dans la position ouverte et ne forment pas le corps creux. Afin de former le corps creux, les première et seconde parties sont réunies en dehors de la zone de pliage ou de courbure. Ainsi, le corps creux est facile à obtenir par moulage des première et seconde parties.

De préférence, la zone de pliage ou de courbure comprend un film en matière plastique.

Un tel film est venu de moulage avec les première et deuxième parties. Le film présente généralement une épaisseur de matière plastique moindre que les première et seconde parties.

Selon une autre caractéristique optionnelle de l'ouvrant arrière selon l'invention, l'ouvrant arrière comprend une pièce de structure en matière plastique solidarisée à la garniture d'habillage et agencée entre la garniture d'habillage et la peau d'apparence.

On comprendra par « pièce de structure », une pièce servant de support aux parties décoratives telles que la garniture d'habillage et la peau d'apparence et, le cas échéant, à des organes fonctionnels tels que des charnières ou une serrure. La pièce de structure présente une rigidité suffisante pour l'usage auquel elle est destinée. En particulier, la pièce de structure résiste à des sollicitations mécaniques particulières en cas d'usage spécifique. Ainsi, la pièce de structure apporte à l'ouvrant arrière la rigidité dont l'ouvrant doit faire preuve pour lui permettre de supporter une charge importante, notamment la charge d'objets ou de personnes lorsque celui-ci est dans sa position ouverte. Par charge importante, on fait ici référence à des objets ou plusieurs personnes dont le poids total est supérieur à 100 kg.

De plus, la rigidité apportée par la pièce de structure permet d'assurer une absorption efficace de l'énergie d'un éventuel choc arrière, la pièce de structure absorbant alors l'essentiel de l'énergie du choc.

Avantageusement, la pièce de structure présente, dans un plan perpendiculaire à un axe géométrique transversal du véhicule, une section générale en forme de U.

Une telle section de la pièce de structure permet dé conférer à l'ouvrant, lorsqu'il est dans sa position ouverte, une rigidité suffisante suivant une direction verticale. Ainsi, si l'axe de pivotement de l'ouvrant se trouve en partie inférieure de l'ouvrant, lorsque ce dernier est dans sa position ouverte, il peut supporter la charge d'une personne prenant appui sur l'ouvrant ou bien la charge d'objets portés par l'ouvrant. La section générale en forme de U confère donc, à la pièce de structure, une résistance à la flexion.

Avantageusement, la pièce de structure comporte un fond venant au voisinage de la peau d'apparence de façon à soutenir la peau d'apparence et assurer une fonction dite « anti-cloquage », consistant à empêcher que ladite peau ne s'enfonce sous la pression d'un doigt d'un utilisateur, afin que cet utilisateur ait une perception de bonne qualité de l'ouvrant.

Selon une autre caractéristique optionnelle de l'ouvrant arrière selon l'invention, la pièce de structure comporte des créneaux et/ou des embrasures formés sur des parties solidarisées à la garniture, les créneaux alternant, le cas échéant, avec les embrasures selon une direction transversale du véhicule.

Les créneaux et embrasures formés sur les parties solidarisées à la garniture permettent de rigidifier davantage la pièce de structure. Plus précisément, dans le cas où l'ouvrant est dans sa position fermée, une pièce de structure comportant de tels créneaux et embrasures est rigidifiée par rapport à la direction longitudinale du véhicule. Ainsi, la pièce de structure présente des propriétés d'absorption d'énergie améliorées du choc arrière.

Les créneaux et embrasures confèrent donc, à la pièce de structure, une résistance à la compression.

De préférence, la pièce de structure comporte un prolongement d'au moins une des parties, ce prolongement formant un prolongement de support de la garniture d'habillage.

Un tel prolongement de la pièce de structure permet de supporter la garniture d'habillage. En particulier, le prolongement supportant la garniture sur une zone de support, le prolongement permet d'améliorer la qualité perçue de l'ouvrant, notamment dans la zone de support.

Avantageusement, l'ouvrant arrière comprenant un rebord supérieur, le prolongement de support comprend des saillies de support du rebord supérieur, les saillies étant au moins partiellement rapportées au rebord supérieur.

On appellera « rebord supérieur » de l'ouvrant arrière, une zone de l'ouvrant visible sur le dessus de l'ouvrant lorsque celui-ci est dans sa position fermée. Dans le cas où l'obturation complète de l'accès au véhicule est réalisée au moyen d'un ouvrant arrière complémentaire, généralement appelé hayon, le rebord supérieur de l'ouvrant arrière selon l'invention est généralement muni d'un organe d'étanchéité, par exemple, un joint à écrasement.

Les saillies de support du rebord supérieur permettent d'apporter de la rigidité au rebord supérieur de façon que, lorsqu'un éventuel hayon est fermé de façon à obturer complètement l'accès au véhicule, l'étanchéité entre l'ouvrant arrière selon l'invention et le hayon est parfaite.

De préférence, l'ouvrant arrière comprend des moyens de liaison de la pièce de structure à la caisse fixés à la pièce de structure.

De tels moyens de liaison comprennent, par exemple, des charnières et une serrure.

Ces moyens de liaison permettent, lorsque l'ouvrant est dans sa position fermée de maintenir une orientation sensiblement constante de la pièce de structure en cas de choc arrière de façon que l'énergie du choc soit efficacement absorbée par la pièce de structure pendant toute la durée du choc.

Avantageusement, la pièce de structure est réalisée dans une matière plastique renforcée par des fibres, par exemple du SMC.

L'invention sera mieux comprise à la lecture de la description qui va suivre, donnée uniquement à titre d'exemple non limitatif et faite en se référant aux dessins dans lesquels :
- la figure 1 est une vue en perspective d'un véhicule automobile comprenant un ouvrant arrière selon l'invention en position ouverte;
- la figure 2 est une coupe selon un plan transversal médian du véhicule de l'ouvrant arrière représenté à la figure 1 non assemblé;
- la figure 3 est une coupe selon un plan transversal médian du véhicule de l'ouvrant arrière représenté à la figure 1 ;
- la figure 4 est une vue éclatée en perspective de l'ouvrant arrière de la figure 1 ;
- la figure 5 est une vue de la pièce de structure de l'ouvrant de la figure 4 suivant la flèche 1 ;

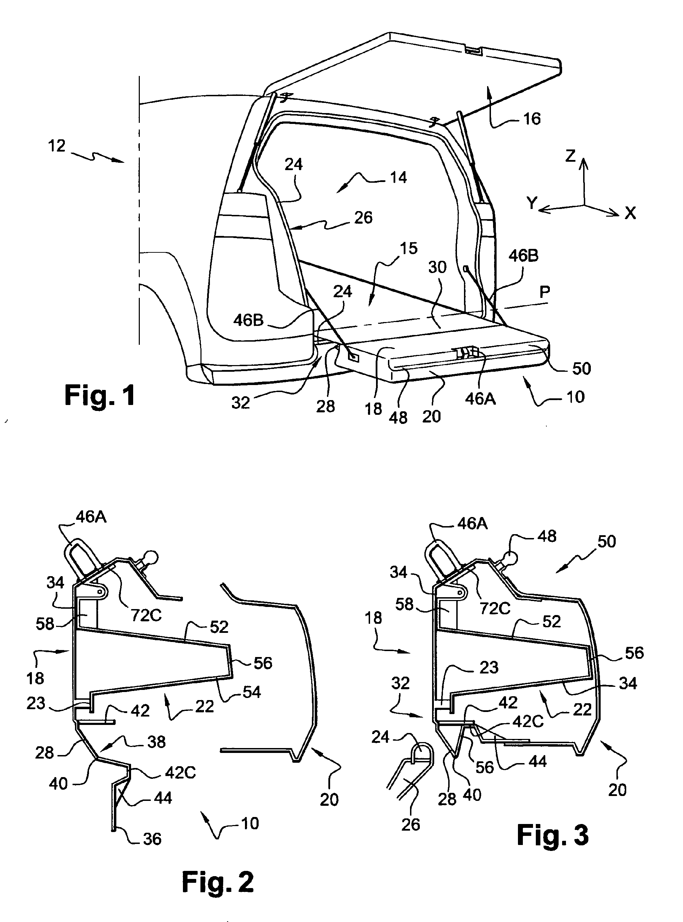

Sur la figure 1, on a représenté des axes X, Y, Z orthogonaux entre eux correspondant aux orientations habituelles longitudinale (X), transversale (Y) et verticale (Z) d'un véhicule.

On a représenté sur les figures 1, 2, 3 et 4, un ouvrant arrière 10 pour véhicule automobile.

L'ouvrant 10 est mobile entre une positon fermée dans laquelle il obture partiellement un accès 14 d'un véhicule 12 et une position ouverte dans laquelle il libère partiellement l'accès 14 au véhicule. En l'espèce, l'ouvrant 10 est monté pivotant sur le véhicule 12 autour d'un axe géométrique transversal parallèle à la direction Y situé en partie inférieure de l'ouvrant, par exemple à l'aide de charnières (non représentées).

Dans la position ouverte et comme représenté à la figure 1, l'ouvrant arrière 10 forme un prolongement d'un plancher 15 du véhicule 12, ce prolongement étant sensiblement parallèle au plan horizontal X, Y de façon que des utilisateurs du véhicule 12 peuvent s'appuyer sur l'ouvrant 10 ou y déposer des objets.

Un ouvrant arrière complémentaire 16, en l'espèce un hayon représenté dans sa position ouverte, permet l'obturation complète de l'accès 14 au véhicule 12.

L'ouvrant 10 comprend une garniture intérieure d'habillage 18 moulée dans une matière plastique thermoplastique. L'ouvrant 10 comprend également une peau extérieure d'apparence 20 moulée dans une matière plastique thermoplastique. Sur la figure 1, l'ouvrant 10 en position ouverte présente la garniture 18 sur le dessus.

En outre et comme cela est représenté notamment sur les figures 2, 3 et 4, l'ouvrant 10 comprend une pièce de structure 22 moulée dans une matière plastique renforcée par des fibres, de préférence du SMC. Cette pièce de structure 22 est solidarisée à la garniture d'habillage 18 par l'intermédiaire de vis 23 et agencée entre la garniture 18 et la peau 20.

Le véhicule 12 comprend un organe d'étanchéité. Sur la figure 1, l'organe d'étanchéité est un joint à écrasement 24 agencé sur un contour de la caisse 26 du véhicule 12. Une surface d'étanchéité 28 de la garniture 18 est destinée à coopérer avec cet organe d'étanchéité 24 lorsque l'ouvrant 10 est dans sa position fermée.

Un prolongement amovible 30 peut pivoter autour d'un axe P parallèle à la direction Y. Ce prolongement 30 recouvre partiellement l'ouvrant arrière 10 lorsque ce dernier est dans sa position ouverte et permet ainsi de protéger la surface d'étanchéité 28 de la garniture 18.

Comme représenté plus en détail sur les figures 2, 3 et 4, la surface d'étanchéité 28 est portée par un corps creux 32 venu de moulage avec la garniture d'habillage 18. Ce corps creux 32 présente, dans un plan perpendiculaire à la direction transversale Y, une section sensiblement triangulaire.

Sur ces figures 2 et 3, la garniture 18 comprend des première et seconde parties, respectivement désignées par les références 34 et 36, reliées l'une à l'autre par une zone de pliage 38. Cette zone de pliage 38 comprend ici un film 40 formant charnière en matière plastique venu de moulage avec la garniture 18. En l'espèce, le film 40 est une partie de la pièce moulée présentant une épaisseur de matière plastique moindre que les parties 34, 36.

Les première et seconde partie 34, 36 sont mobiles l'une par rapport à l'autre par pliage de la zone 38.

Sur la figure 2, les parties 34 et 36 sont dans une position ouverte. Dans cette position, la partie 34 n'est en contact avec la partie 36 que par l'intermédiaire de la zone 38.

En variante, les parties 34 et 36 pourront être mobiles l'une par rapport à l'autre par flexion d'une zone de courbure.

Sur la figure 3, les parties 34 et 36 sont dans une position fermée de façon qu'elles forment le corps creux 32. Dans cette position fermée, les parties 34 et 36 se rejoignent en dehors de la zone 38 en coopérant respectivement l'une avec l'autre par l'intermédiaire de surface de fermeture 42 et surface de fermeture complémentaire 42C.

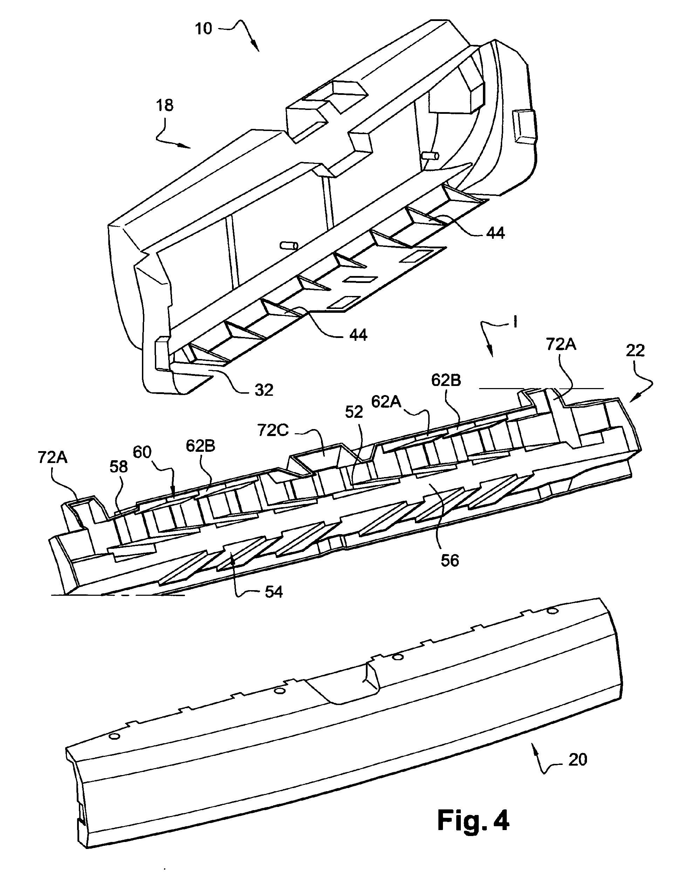

La seconde partie 36 comprend des nervures de rigidification 44. Ces nervures 44 sont agencés sur la seconde partie entre la zone de pliage 38 et une jonction entre la garniture 18 et la peau 20. Ces nervures de rigidification 44 sont également visibles sur la garniture 18 représentée sur la figure 4.

Des moyens de liaison 46 de la pièce de structure 22 à la caisse 26 sont fixés à la pièce de structure 22. Comme représenté sur les figures 1, 2 et 3, ces moyens 46 comprennent une partie 46A d'une serrure, des charnières (non représentés), des câbles de soutient 46B.

Un joint d'étanchéité 48, également visible sur les figures 1, 2, et 3, est agencé sur un rebord supérieur 50 de l'ouvrant 10 de façon à assurer l'étanchéité entre l'ouvrant 10 et le hayon 16.

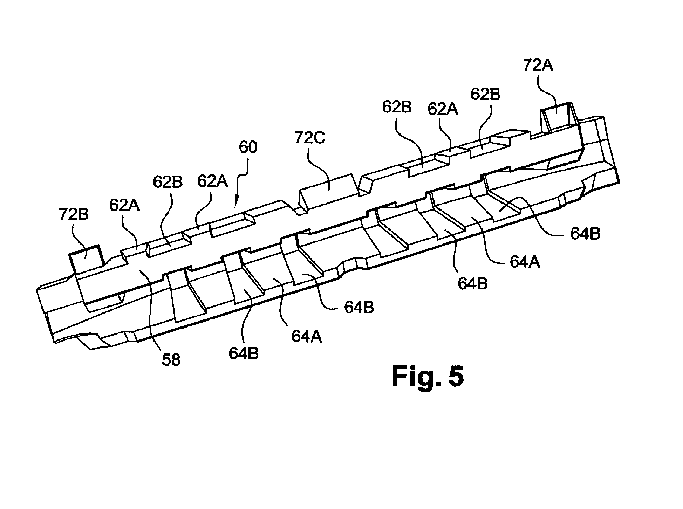

On a représenté sur les figures 4 et 5, la pièce de structure 22 de l'ouvrant 10.

Dans le plan X,Z perpendiculaire à l'axe transversal Y du véhicule 12, cette pièce de structure 22 présente une section générale en forme de U. La pièce 22 comprend deux parties 52 et 54, en l'espèce deux parois, rapportées et solidarisées à la garniture 18, ainsi qu'un fond 56 en regard de la peau.

La pièce de structure 22 comporte également un prolongement 58 de la paroi 52. Ce prolongement forme un prolongement de support de la garniture d'habillage 18. Ce prolongement 58 s'étend sensiblement perpendiculairement par rapport à la paroi 52 et est rapporté à la garniture d'habillage 18 comme cela est représenté sur la figure 3.

Le prolongement 58 comprend également des saillies 60 de support du rebord supérieur 50. Ces saillies 60 s'étendent sensiblement parallèlement à la paroi 52 et sont partiellement rapportées au rebord supérieur 50 de façon à supporter ce rebord supérieur 50. Ces saillies 60 sont formées par une alternance de créneaux 62A et d'embrasures 62B alternant selon la direction transversale du véhicule 12.

La pièce de structure 22 comporte des créneaux 64A et embrasures 64B formés, en l'espèce par moulage, sur les parois 52 et 54, ces créneaux 64A et embrasures 64B alternant selon la direction transversale du véhicule 12.

Le prolongement 58 comprend également des saillies de maintient 72A, 72B et 72C permettant, en partie, de positionner et de maintenir la pièce de structure 22 dans la garniture 18. La saillie 72C permet de fixer la serrure 46A à la pièce de structure 22.

L'invention ne se limite pas au mode de réalisation précédemment décrit.

## Revendications

1. Ouvrant arrière (10) pour véhicule automobile (12) monté mobile entre une position fermée dans laquelle il obture au moins partiellement un accès (14) au véhicule (12), et une position ouverte dans laquelle il libère au moins partiellement l'accès (14) au véhicule (12) ; l'ouvrant (10) comprenant une peau extérieure d'apparence (20) et une garniture intérieure d'habillage (18), la garniture d'habillage (18) étant moulée dans une matière plastique ; la garniture d'habillage (18) comprenant une surface d'étanchéité (28) destinée à coopérer avec un organe d'étanchéité (24) agencé sur la caisse (26) du véhicule (12) lorsque l'ouvrant (10) est en position fermée, **caractérisé en ce que** la surface d'étanchéité (28) est portée par un corps creux (32) venu de moulage avec la garniture d'habillage (18).

2. Ouvrant arrière (10) selon la revendication 1, monté pivotant autour d'un axe géométrique transversal au véhicule (12), de préférence situé en partie inférieure de l'ouvrant (10), de sorte que l'ouvrant (10) en position ouverte présente la garniture intérieure d'habillage (18) sur le dessus.

3. Ouvrant arrière (10) selon la revendication 1 ou 2, dans lequel la garniture (18) comprend des première (34) et seconde (36) parties reliées l'une à l'autre par une zone de pliage ou de courbure (38), les première (34) et seconde (36) parties étant mobiles l'une par rapport à l'autre par pliage de la zone de pliage ou de courbure (38) entre :
- une position ouverte dans laquelle la première (34) et la seconde (36) parties ne sont en contact l'une avec l'autre que par l'intermédiaire de la zone de pliage ou de courbure (38), et
- une position fermée dans laquelle les première (34) et seconde (36) parties se rejoignent en dehors de la zone de pliage ou de courbure (38) et forment le corps creux (32).

4. Ouvrant arrière (10) selon la revendication 3, dans lequel la zone de pliage ou de courbure (38) comprend un film (40) en matière plastique.

5. Ouvrant arrière (10) selon l'une quelconque des revendications 1 à 4, comprenant une pièce de structure (22) en matière plastique solidarisée à la garniture d'habillage (18) et agencée entre la garniture d'habillage (18) et la peau d'apparence (20).

6. Ouvrant arrière (10) selon la revendication 5, la pièce de structure (22) présente, dans un plan perpendiculaire à un axe géométrique transversal du véhicule (12), une section générale en forme de U.

7. Ouvrant arrière (10) selon la revendication 5 ou 6, dans lequel la pièce de structure (22) comporte un fond (56) venant au voisinage de la peau d'apparence (20) de façon à soutenir la peau d'apparence (20).

8. Ouvrant arrière (10) selon l'une quelconque des revendications 5 à 7, dans lequel la pièce de structure (22) comporte des créneaux (64A) et/ou des embrasures (64B) formés sur des parties (52, 54) solidarisées à la garniture (18), les créneaux (64A) alternant, le cas échéant, avec les embrasures (64B) selon une direction transversale (Y) du véhicule (12).

9. Ouvrant arrière (10) selon la revendication 8, dans lequel la pièce de structure (22) comporte un prolongement (58) d'au moins une des parties (52), ce prolongement (58) formant un prolongement de support de la garniture d'habillage (18).

10. Ouvrant arrière (10) selon la revendication 9, dans lequel, l'ouvrant arrière (10) comprenant un rebord supérieur (50), le prolongement de support (58) comprend des saillies (60) de support du rebord supérieur, les saillies étant au moins partiellement rapportées au rebord supérieur (50).

11. Ouvrant arrière (10) selon l'une quelconque des revendications 5 à 10, comprenant des moyens de liaison (46A, 46B) de la pièce de structure (22) à la caisse (26) fixés à la pièce de structure (22).

12. Ouvrant arrière (10) selon l'une quelconque des revendications 5 à 11, dans lequel la pièce de structure (22) est réalisée dans une matière plastique renforcée par des fibres, par exemple du SMC.

## Claims

1. Rear door (10) for a motor vehicle (12), the door being mounted to move between a closed position in which it closes at least part of an access (14) to the vehicle (12) and an open position in which it releases at least part of the access (14) to the vehicle (12); the door (10) comprising an outside appearance skin (20) and an inside trim lining (18), the trim lining (18) being molded out of plastics material; the trim lining (18) including a sealing surface (28) for co-operating, when the door (10) is in the closed position, with a sealing member (24) arranged on the body (26) of the vehicle (12), the door being **characterized in that** the sealing surface (28) is carried by a hollow body (32) molded integrally with the trim lining (18).

2. Rear door (10) according to claim 1, the door being mounted to pivot about an axis extending transversely to the vehicle (12) and preferably situated at the bottom portion of the door (10), in such a manner that the door (10), when in the open position, presents the inside trim lining (18) on top.

3. Rear door (10) according to claim 1 or claim 2, wherein the lining (18) comprises first and second portions (34, 36) that are connected to each other by a fold or bend zone (38), the first and second portions (34, 36) being movable relative to each other by folding the fold or bend zone (38) between:
• an open position in which the first and second portions (34, 36) are in contact with each other only via the fold or bend zone (38); and
• a closed position in which the first and second portions (34, 36) meet outside the fold or bend zone (38) and form the hollow body (32).

4. Rear door (10) according to claim 3, wherein the fold or bend zone (38) comprises a film (40) of plastics material.

5. Rear door (10) according to any one of claims 1 to 4, the door including a structural part (22) of plastics material secured to the trim lining (18) and arranged between the trim lining (18) and the appearance skin (20).

6. Rear door (10) according to claim 5, the structural part (22) presenting, in a plane perpendicular to an axis extending transversely to the vehicle (12), a general section that is U-shaped.

7. Rear door (10) according to claim 5 or claim 6, wherein the structural part (22) includes an end (56) that comes close to the appearance skin (20) so as to support the appearance skin (20).

8. Rear door (10) according to any one of claims 5 to 7, wherein the structural part (22) includes teeth (64A) and/or gaps (64B) formed on portions (52, 54) that are secured to the lining (18), the teeth (64A) alternating, where appropriate, with the gaps (64B) in a transverse direction (Y) of the vehicle (12).

9. Rear door (10) according to claim 8, wherein the structural part (22) includes an extension (58) of at least one of the portions (52), the extension (58) forming a support extension for the trim lining (18).

10. Rear door (10) according to claim 9, wherein the rear door (10) includes a top rim (50), and the support extension (58) includes projections (60) for supporting the top rim, the projections being fitted at least in part on the top rim (50).

11. Rear door (10) according to any one of claims 5 to 10, the door including connection means (46A, 46B) for connecting the structural part (22) to the body (26), the connection means being fastened to the structural part (22).

12. Rear door (10) according to any one of claims 5 to 11, wherein the structural part (22) is made of a fiber-reinforced plastics material, e.g. of SMC.

## Patentansprüche

1. Heckklappe (10) für ein Kraftfahrzeug (12), die zwischen einer geschlossenen Position, in der sie einen Zugang (14) zu dem Fahrzeug (12) mindestens teilweise verschließt, und einer offenen Position, in der sie den Zugang (14) zu dem Fahrzeug (12) wenigstens teilweise freigibt, beweglich montiert ist, wobei die Klappe (10) eine Zieraußenhaut (20) und ein inneres Verkleidungsfutter (18) aufweist, wobei das Verkleidungsfutter (18) aus einem Kunststoff geformt ist, wobei das Verkleidungsfutter (18) eine Abdichtfläche (28) aufweist, die dazu bestimmt ist, mit einem Abdichtorgan (24), das an der Karosserie (26) des Fahrzeugs (12) eingerichtet ist, zusammenzuwirken, wenn sich die Klappe (10) in geschlossener Position befindet, **dadurch gekennzeichnet, dass** die Abdichtfläche (28) von einem Hohlkörper (32) gehalten wird, der aus einem Stück mit dem Verkleidungsfutter (18) geformt ist.

2. Heckklappe (10) nach Anspruch 1, die schwenkend um eine geometrische Achse quer zu dem Fahrzeug (12), die sich vorzugsweise im unteren Teil der Klappe (10) befindet, derart montiert ist, dass die Klappe (10) in offener Position das innere Verkleidungsfutter (18) an der Oberseite aufweist.

3. Heckklappe (10) nach Anspruch 1 oder 2, bei der das Futter (18) einen ersten (34) und einen zweiten (36) Teil aufweist, die miteinander durch eine Falt- oder Krümmungszone (38) verbunden sind, wobei der erste (34) und der zweite Teil (36) zueinander in Bezug zur Faltung der Falt- oder Krümmungszone (38) beweglich sind zwischen:
- einer offenen Position, in der der erste (34) und der zweite (36) Teil miteinander nur über die Falt- oder Krümmungszone (38) in Berührung sind, und
- einer geschlossenen Position, in der sich der erste (34) und der zweite (36) Teil außerhalb der Falt- oder Krümmungszone (38) treffen und den Hohlkörper (32) bilden.

4. Heckklappe (10) nach Anspruch 3, bei der die Falt- oder Krümmungszone (38) eine Folie (40) aus Kunststoff aufweist.

5. Heckklappe (10) nach einem der Ansprüche 1 bis 4, die einen Strukturteil (22) aus Kunststoff aufweist, der fest mit dem Verkleidungsfutter (18) verbunden und zwischen dem Verkleidungsfutter (18) und der Zieraußenhaut (20) angeordnet ist.

6. Heckklappe (10) nach Anspruch 5, wobei der Strukturteil (22) in einer Ebene senkrecht zu einer geometrischen Querachse des Fahrzeugs (12) einen allgemeinen Querschnitt in U-Form aufweist.

7. Heckklappe (10) nach Anspruch 5 oder 6, bei der der Strukturteil (22) einen Boden (56) aufweist, der derart in die Nähe der Zieraußenhaut (20) kommt, dass er die Zieraußenhaut (20) stützt.

8. Heckklappe (10) nach einem der Ansprüche 5 bis 7, bei der der Strukturteil (22) Zinnen (64A) und/oder Schmiegen (64B) aufweist, die an Teilen (52, 54) ausgebildet sind, die fest mit dem Futter (18) verbunden sind, wobei die Zinnen (64A) gegebenenfalls mit den Schmiegen (64B) entlang einer Querrichtung (Y) des Fahrzeugs (12) abwechseln.

9. Heckklappe (10) nach Anspruch 8, bei der der Strukturteil (22) eine Verlängerung (58) wenigstens eines der Teile (52) aufweist, wobei diese Verlängerung (58) eine Verlängerung zum Stützen des Verkleidungsfutters (18) bildet.

10. Heckklappe (10) nach Anspruch 9, bei der die Heckklappe (10) einen oberen Rand (50) aufweist, wobei die Stützverlängerung (58) Vorsprünge (60) zum Stützen des oberen Rands aufweist, wobei die Vorsprünge wenigstens teilweise am oberen Rand (50) angebaut sind.

11. Heckklappe (10) nach einem der Ansprüche 5 bis 10, die Verbindungsmittel (46A, 46B) des Strukturteils (22) mit der Karosserie (26), die an dem Strukturteil (22) befestigt sind, aufweist.

12. Heckklappe (10) nach einem der Ansprüche 5 bis 11, bei der der Strukturteil (22) aus einem mit Fasern verstärkten Kunststoff, zum Beispiel SMC, hergestellt ist.
